# EUROPEAN PATENT APPLICATION

(11) **EP 2 309 118 A1**
(43) Date of publication of application: **13.04.2011**
(21) Application number: 09172799.0
(22) Date of filing: 12.10.2009
(51) Int. Cl.: F03B 13/26

(54) **Device for generating electrical energy from hydraulic energy**

(71) Applicant: Baggerwerken Decloedt en Zoon N.V., 8400 Oostende (BE)
(72) Inventor: Verboomen, Bart Peter, B-9521 Sint-Lievens-Houtem (BE); Dens, Gusta Louis, B-3110 Rotselaar (BE)
(74) Representative: Brouwer, Hendrik Rogier

(57) **Abstract**

The invention relates to a device for generating electrical energy from hydraulic energy. The device comprises a water barrier, such as a dam or wall, which is situated in a water mass subject to tidal current and is further provided with openings situated below the water surface in which at least one turbine is received for the purpose of converting the potential energy of the tidal current into electrical energy. The device preferably also comprises a number of wind turbines. The invention likewise relates to an assembly of such devices.

## Description

The invention relates to a device for generating electrical energy from hydraulic energy. The invention also relates to an assembly of a number of such devices.

Devices for generating electrical energy from hydraulic energy are per se known. Tidal power plants for instance generate electrical energy by making use of the difference between a high and a low water level. Such a difference in water level is created in the known device by means of a dam, which can temporarily close off a water mass from the water mass subject to tides. The water level of the closed-off water mass will generally differ from the water level on the other side of the dam. The dam is then provided with openings in which turbines are placed. The water flow generated through the openings under the influence of the difference in water level sets the blades of the turbines into rotation. This mechanical energy is converted into electrical energy by means of generators.

A known tidal power plant is the power plant at Saint-Malo in France. This tidal power plant comprises an 850 metre wide and 33 meter high dam in the river Rance. Lying behind the dam is a substantially static reservoir of 17 km², sufficient to accommodate a water mass of 180 million m³. At spring tide 7000 m³ of water per second runs through the estuary, this driving the 24 turbines, each with a diameter of 5.3 m. The annual power output amounts to about 600 million kWh.

The known device for generating electrical energy from hydraulic energy is cost-efficient because the difference between the water level in the static, closed-off water mass and the water mass subject to tides - about 13.5 metres during spring tide - is relatively large. This relatively large difference in water level, or tidal range, is obtained due to the presence of the static water mass. Such a reservoir must however cover a large area, which has an impact on the natural environment.

The object of the present invention is to provide a device for generating electrical energy from hydraulic energy which does not have at least the above stated drawback. This object is achieved according to the invention by providing a device for generating electrical energy from hydraulic energy, comprising a water barrier, such as a dam or wall, which is situated in a water mass subject to tidal current and is provided with openings situated below the water surface in which at least one turbine is received for the purpose of converting the potential energy of the tidal current into electrical energy.

One difference with the known device is that the water barrier is placed in a water mass subject to tidal current. This means that a water mass subject to tidal current is situated on either side of the water barrier. In a water mass subject to tidal current a typical difference in water level between the highest and lowest water level in a twenty-four hour period is about 1 m. Because the device according to the invention comprises among other parts a water barrier, it is found that the difference in water level between the highest and lowest water level in a twenty-four hour period can increase by several tens of centimetres. This makes the device cost-effective.

A further advantage of the device according to the invention is that it generates electric current in two directions, i.e. with a water flow through the openings from one side of the water barrier to the other, and vice versa.

In the context of the present application a turbine is defined as a device which converts the hydraulic energy of a fluid (liquid or gas) into mechanical energy by means of a rotating blade system. This mechanical energy can then be used to drive another machine or an electric generator. The turbines are provided in known manner with a housing around the rotor. The housing guides the flow in the desired direction, this enhancing efficiency. A hydraulic turbine is understood to mean a turbine which makes use of the hydraulic energy of water between two points with a height difference. A generator is understood to mean a device which can convert mechanical energy generated by a rotating shaft into electrical energy. The conversion is brought about by the movement (rotation) of an electrical conductor through a magnetic field, whereby an electric voltage is generated in the conductor. This causes an electric current in a closed circuit.

In order to further increase the efficiency of the device according to the invention, according to a preferred embodiment the water barrier extends substantially in a direction which forms an angle of at least 45 degrees with the average direction of the tidal current. The average direction of the tidal current can be easily determined by measurement or is known from previous measurements and/or model calculations. Optimal use is in this way made of the periodical difference in water level created by the tidal current.

A further embodiment of the device according to the invention is characterized in that the water barrier extends substantially in a direction running perpendicularly of the average direction of the tidal current. The water barrier need not extend per se in a straight line but can, if desired, be arcuate or for instance have a bend. What is important in the present embodiment is that the water barrier runs substantially perpendicularly of the average direction of the tidal current.

The number of turbines to be placed in the opening is in principle unlimited and generally depends on the available space. The power which can be generated by the device depends on a large number of factors, such as for instance the density of the water mass, the maximum tidal range over the closed water barrier, the overall throughflow area of the openings in the water barrier and the axial flow rate through the turbines. A preferred embodiment of the device according to the invention has the feature that the overall throughflow area of the openings amounts to at least 5% of the surface area of the water barrier, more preferably at least 10% of the surface area of the water barrier, and most preferably at least 15% of the surface area of the water barrier. A device according to the invention is for instance capable of generating a power of more than 20 GW, more preferably more than 35 GW, and most preferably more than 50 GW.

In another aspect of the invention a device is provided with the feature that it comprises on at least one outer end of the water barrier a water-obstructing side wall extending substantially perpendicularly of the water barrier. Such an embodiment of the device has a further increased efficiency, particularly because a larger periodic difference in water level is achieved. The device according to the invention is still more preferably characterized in this respect in that it comprises a water-obstructing side wall on both outer ends of the water barrier, thus forming an H-shaped structure. The water barrier here forms the transverse part of the 'H', while the legs of the 'H' are formed by the two water-obstructing side walls.

In order to further increase the power which can be generated, in a further embodiment of the device according to the invention the ratio of the length of one water-obstructing side wall to the length of the water barrier amounts to at least 0.5, more preferably at least 0.75, and most preferably at least 1.

A particularly advantageous embodiment of the device according to the invention has the feature that it comprises a number of wind turbines, wherein at least some of the wind turbines are more preferably arranged on the water barrier and/or the water-obstructing wall(s). The present embodiment provides a great flexibility and provides, among other advantages, generation of electric power which is more constant over time.

The device according to the invention, and more particularly the water barrier, can be manufactured in a manner known to the skilled person. In a preferred embodiment of the device at least the water barrier and/or the water-obstructing wall(s) of the device are situated on an existing sandbank, which is more preferably provided with wind turbines. In the context of this application sandbank is understood to mean a generally natural accumulation of sand at the bottom of a water mass.

In a further aspect of the invention a device is provided which comprises joint transport means for the electric current generated by the turbines and the wind turbines. Such transport means for instance comprise electrical cables which are received in a suitable sheath and lead via the bed of the water mass from the device to a take-off point for the electric current.

Although the device can be situated relatively close to land, a preferred embodiment of the device according to the invention is characterized in that the device, and in particular the water barrier and/or the water-obstructing side wall(s), are situated at least 10 km out of the coast.

In a further embodiment of the device according to the invention the water barrier has a length of at least 2 km, more preferably at least 5 km, and most preferably at least 10 km.

In yet another aspect of the invention an assembly is provided of at least a first and a second device according to the invention, wherein the devices are coupled by means of a joint transport means for the generated electric current, and wherein the devices are arranged in the water mass at a position and in a direction such that the tidal current at the position of the first device has a phase difference with the tidal current at the position of the second device. A more stable power generation is in this way obtained, with fewer fluctuations over time.

In a preferred embodiment an assembly of at least a first and a second device according to the invention is provided, wherein the devices are coupled by means of a joint transport means for the generated electric current, and wherein the devices are arranged in the water mass at a position and in a direction such that the tidal current at the position of the first device runs substantially out of phase with the tidal current at the position of the second device.

The invention will now be further elucidated with reference to the accompanying figures, without otherwise being limited thereto. In the figures
Figure 1 shows a schematic perspective top view of an embodiment of the device according to the invention; and
Figure 2a shows a graphic representation of the water level of a water mass subject to tidal current; and
Figure 2b shows a graphic representation of the water level of the water mass of figure 2a in which a device according to the invention is arranged.

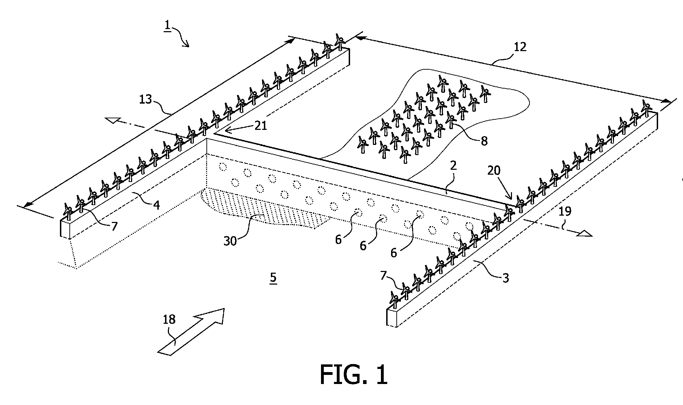

Referring to figure 1, a device 1 is shown for generating electrical energy from hydraulic energy. Device 1 comprises a water barrier in the form of a substantially linear dam 2 of overall length 12, which comprises a water-obstructing side wall (3, 4) on both outer ends (20, 21), whereby an H-shaped structure is formed. The water-obstructing side walls (3, 4) here extend substantially perpendicularly of water barrier 2. The shown device 1 comprises a water barrier 2 with a length 12 of more than 5 km. Dam 2 and side walls (3, 4) are arranged in known manner in a water mass 5 subject to tidal current, for instance by tipping rocks, gravel, sand and so on and/or by pouring concrete, and/or by arranging prefabricated elements. In the shown exemplary embodiment the ratio of the length 13 of the water-obstructing side walls (3, 4) to the length 12 of dam 2 is about 1.

At least dam 2 is provided according to the invention with a number of openings 6 which are generally situated below the water surface and in which at least one turbine (not shown) is received for converting the potential energy of water mass 5 into electrical energy. Openings 6 can in principle take any form, such as for instance tubes of a polygonal or circular cross-section. The tubes are arranged in known manner in dam 2. If desired, they are closable. In the shown embodiment the overall throughflow area of openings 6 amounts to about 15% of the surface area of the water barrier.

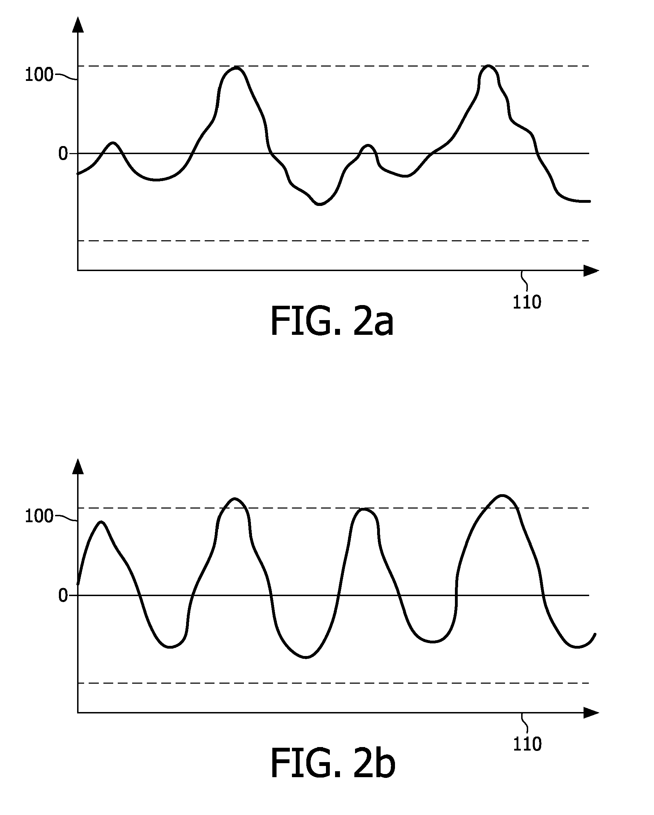

The effect of the tidal current on water mass 5 is shown with reference to figure 2a. Water level 100 fluctuates as a function of the hour 110 of the day in periodic manner, wherein 4 peak heights are observed at high tide and 4 valleys at low tide. The maximum peak height can vary but amounts for instance to 0.5 m. By arranging device 1 in water mass 5 the peak heights of water mass 5 are raised, wherein the maximum peak heights can increase by tens of centimetres (see figure 2b). The increased peak heights increase the potential energy of water mass 5.

It is advantageous to position the device according to the invention, and more particularly dam 2, in the water mass such that it extends substantially in a direction 19 which forms an angle of at least 45 degrees with the average direction 18 of the tidal current, and preferably runs perpendicularly of the average direction 18 of the tidal current, as shown in figure 1.

Device 1 is further provided with a number of wind turbines 7, wherein at least some of the wind turbines 7 are arranged on water barrier 2 and on the water-obstructing walls (3, 4).

Water barrier 2 is arranged at least partially on existing sandbanks 30. These are preferably likewise provided with wind turbines 8. Device 1 further comprises transport means for electric current in the form of power cables (not shown) running on or below the bed of water mass 5. The power cables electrically connect wind turbines (7, 8) and the turbines situated in openings 6 to each other. The electric current generated by the turbines and the wind turbines (7, 8) is conducted via the electrical cables to a main cable. The main cable carries the generated current from the device to the shore or other suitable storage location for the electric current.

Device 1 according to the invention can in principle be situated at any location in a water mass 5, and in particular a location were the tidal current is strong. Device 1, and in particular water barrier 2 and/or the water-obstructing side walls (3, 4), are preferably situated at least 10 km out of the coast. The invention also relates to an assembly of a plurality of the devices 1 described above in detail, wherein devices 1 are electrically coupled by means of a joint power cable. Water barriers 2 of devices 1 are arranged at a position and in a direction in water mass 5 (they can be several kilometres distant from each other) such that the tidal current at the position of a first device runs substantially out of phase with the tidal current at the position of a second device. By coupling a plurality of devices 1 electrically to each other in this manner a power generation can be obtained current production which is more constant over time. A power generation which is more constant and stable over time is likewise supported by the combination of the turbines incorporated in dam 2, and wind turbines (7, 8).

The invention is by no means limited to the above described exemplary embodiments, and many variants are possible within the scope of protection of the appended claims.

## Claims

1. Device for generating electrical energy from hydraulic energy, comprising a water barrier, such as a dam or wall, which is situated in a water mass subject to tidal current and is provided with openings situated below the water surface in which at least one turbine is received for the purpose of converting the potential energy of the tidal current into electrical energy.

2. Device as claimed in claim 1, **characterized in that** the water barrier extends substantially in a direction which forms an angle of at least 45 degrees with the average direction of the tidal current.

3. Device as claimed in claim 2, **characterized in that** the water barrier extends substantially in a direction running perpendicularly of the average direction of the tidal current.

4. Device as claimed in any of the foregoing claims, **characterized in that** the overall throughflow area of the openings amounts to at least 10% of the surface area of the water barrier.

5. Device as claimed in any of the foregoing claims, **characterized in that** it comprises on at least one outer end of the water barrier a water-obstructing side wall extending substantially perpendicularly of the water barrier.

6. Device as claimed in claim 5, **characterized in that** it comprises a water-obstructing side wall on both outer ends of the water barrier, thus forming an H-shaped structure.

7. Device as claimed in claim 5 or 6, **characterized in that** the ratio of the length of one water-obstructing side wall to the length of the water barrier amounts to at least 0.5.

8. Device as claimed in any of the foregoing claims, **characterized in that** it comprises a number of wind turbines.

9. Device as claimed in claim 8, **characterized in that** at least some of the wind turbines are arranged on the water barrier and/or the water-obstructing wall(s).

10. Device as claimed in any of the foregoing claims, **characterized in that** at least the water barrier and/or the water-obstructing wall(s) of the device are situated on an existing sandbank, which is preferably provided with wind turbines.

11. Device as claimed in any of the foregoing claims, **characterized in that** the device comprises joint transport means for the electric current generated by the turbines and the wind turbines.

12. Device as claimed in any of the foregoing claims, **characterized in that** the device, and in particular the water barrier and/or the water-obstructing side wall(s), are situated at least 10 km out of the coast.

13. Device as claimed in any of the foregoing claims, **characterized in that** the water barrier has a length of at least 2 km, more preferably at least 5 km, and most preferably at least 10 km.

14. Assembly of at least a first and a second device as claimed in any of the foregoing claims, wherein the devices are coupled by means of a joint transport means for the generated electric current, and wherein the devices are arranged in the water mass at a position and in a direction such that the tidal current at the position of the first device runs substantially out of phase with the tidal current at the position of the second device.
